# Europäisches Patentamt
## European Patent Office
## Office européen des brevets

(19)

(11) Numéro de publication: **0 028 191**
**B1**

(12) **FASCICULE DE BREVET EUROPEEN**

(45) Date de publication du fascicule du brevet: **29.06.83**

(51) Int. Cl.³: **G 01 B 7/34,** B 21 B 37/06, G 01 L 5/10

(21) Numéro de dépôt: **80401500.6**

(22) Date de dépôt: **22.10.80**

(54) Dispositif de détection des défauts de planéité d'une bande tendue en déplacement.

(30) Priorité: **26.10.79 FR 7926618**

(43) Date de publication de la demande:
**06.05.81 Bulletin 81/18**

(45) Mention de la délivrance du brevet:
**29.06.83 Bulletin 83/26**

(84) Etats contractants désignés:
**AT BE CH DE GB IT LI LU NL SE**

(56) Documents cités:
**FR - A - 2 357 876**
**US - A - 3 324 695**
**US - A - 3 481 194**

(73) Titulaire: **SECIM**
**107 boulevard de la Mission Marchand**
**F-92400 Courbevoie (FR)**

(72) Inventeur: **Quehen, André**
**2A, rue Emile Zola**
**F-95300 Pontoise (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

Dispositif de détection des défauts de planéité d'une bande tendue en déplacement

L'invention concerne un dispositif de détection des défauts de planéité d'une bande tendue en déplacement, telle qu'une bande de tôle en cours ou à l'issue d'une opération de laminage ou d'étirage.

Il est nécessaire, en effet, lors du laminage des bandes de métal, plus particulièrement lors du laminage à froid de bandes minces, de détecter les défauts de planéité de ces bandes et de remédier à ces défauts en agissant sur les conditions de laminage ou d'opérer un simple contrôle de la qualité du produit en fin d'opération. Pour effectuer ce réglage ou ce contrôle on utilise généralement un rouleau défflecteur sur lequel passe la tôle à contrôler.

On a proposé divers types de rouleaux comportant une enveloppe externe continue pour éviter de marquer la tôle qui est généralement, au moment de son contrôle, en fin de cycle de fabrication et qui présente un très bon état de surface, cette enveloppe externe entourant un cylindre dans lequel sont disposés, des dispositifs de mesure de la répartition dans la direction axiale des contraintes radiales exercées par la tôle sur le rouleau, à travers l'enveloppe externe mince et flexible.

En effet, les défauts de planéité proviennent de réductions relatives différentes de l'épaisseur de la bande, suivant sa largeur.

Les différentes parties de cette tôle suvissant des réductions différentes ont donc tendance à s'allonger de façon également différente. Comme leur allongement, indépendamment les unes des autres, n'est pas possible, il apparait dans la tôle un état de contrainte interne.

Lorsque le matériau n'est pas suffisamment épais et rigide pour supporter cet état de contrainte, les défauts de planéité apparaissent sous forme de poches au centre de la tôle ou de vagues sur les rives de cette tôle.

Au cours des opérations de laminage à froid, on exerce sur la tôle des tractions extrêmement importantes ce qui fait apparaitre dans la bande de tôle des contraintes élevées qui peuvent empêcher le contrôle visuel des contraintes internes.

Lors du passage de la tôle sous tension sur le rouleau déflecteur, l'état de contraintes des différentes parties de la tôle dans la direction transversale, c'est-à-dire dans la direction axiale du rouleau, provoque des inégalités dans la répartition des contraintes radiales exercées par la tôle sur les différentes dispositifs de mesure.

La connaissance de la répartition axiale des contraintes radiales exercées par la tôle sur le rouleau permet ainsi de détecter des défauts de planéité en cours ou à l'issue du laminage de la tôle, lorsque celle-ci est sous tension.

Des moyens de recueil et de traitement des signaux émis par les détecteurs de contraintes radiales constituant les dispositifs de mesure peuvent permettre de déterminer, par exemple, la distribution des allongements relatifs de la tôle sur toute sa longueur (FR—A—2.357.876).

Dans certains dispositifs connus, on a proposé de disposer les différents détecteurs de contraintes radiales à l'intérieur d'une rainure en forme d'hélice usinée sur un cylindre qu-on recouvre avec l'enveloppe externe mince (US—A—3.324.695).

Dans de tels dispositifs, les capteurs peuvent être placés, par exemple, à l'intérieur de la rainure en forme d'hélice usinée dans le cylindre interne, espacés les uns des autres par une distance fixe de façon à ce que l'ensemble des capteurs disposés sur le rouleau corresponde à la largeur totale de la tôle et passe successivement sous la tôle en appui sur le rouleau, pendant un ou plusieurs tours de ce rouleau. En enregistrant de façon continue le signal des capteurs, on peut avoir une mesure des déplacements · ou des contraintes radiales exercées par la tôle sur le rouleau. De tels dispositifs fournissant des résultats de mesure pour toute la largeur de la tôle en un tour un plusieurs tours du rouleau grâce à des capteurs dont on enregistre le signal en continu ont cependant des inconvénients puisque les zones de mesure ne sont pas séparées matériellement et que le signal enregistré n'est pas parfaitement représentatif de l'état des contraintes dans la tôle au moment où celle-ci passe sur le rouleau. D'autre part, dans de tels dispositifs on ne peut pas faire de corrections relatives à la caractéristique de réponse du capteur aux sollicitations mécaniques et aux différences de température entre les diverses zones du rouleau où se trouvent des capteurs.

Enfin, de tels dispositifs avec enregistrement continu des signaux des capteurs ne sont pas applicables pour des vitesses de rotation du rouleau trop importantes, c'est-à-dire pour des grandes vitesses de défilement de la tôle, ce qui est gênant dans le cas où l'on veut utiliser le dispositif de détection des défauts de planéité dans le cas d'un laminoir ou d'une autre installation à grande vitesse.

On peut imaginer, pour perfectionner le dispositif décrit ci-dessus, la matérialisation de zones de mesure séparées obtenue en usinant le cylindre interne de façon à y réaliser des cavités de petite dimension dont les centres sont alignés sur une hélice enroulée autour de rouleau et réalisant un balayage de toute la largeur de la tôle lorsque le rouleau est en fonctionnement.

Dans chacune des cavités on peut disposer un capteur dont le signal traduit les contraintes radiales exercées par la tôle à son passage au niveau du capteur.

Cependant, même dans ce cas, le signal enregistré au niveau des différents capteurs ne traduit pas exactement l'état de contrainte dans la tôle au moment précis où celle-ci est à l'aplomb du capteur. D'autre part, les corrections dues aux caractéristiques du capteur ou à la température ne sont pas possibles d'une manière simple dans ce cas également.

D'autre part, les défauts de planéité de la tôle se traduisent par des inégalités de traction entre les différentes zones de cette tôle suivant sa largeur. Il importe donc de pouvoir mesurer la traction de la tôle en différents points répartis sur toute la largeur de cette tôle en défilement sur le rouleau. Aucun des dispositifs connus décrits ci-dessus ne permet d'effectuer une mesure instantanée de la traction à un endroit déterminé sur la largeur de la tôle.

Le but de l'invention est donc de proposer un dispositif de détection des défauts de planéité d'une bande tendue en déplacement comprenant un rouleau déflecteur sur lequel passe la bande, ce rouleau étant constitué par un cylindre interne recouvert par une enveloppe cylindrique mince dans lequel sont usinées des cavités de petite dimension débouchant sur la surface latérale du cylindre pour constituer au moins un ensemble d'ouvertures disposées de façon discontinue sur cette surface avec leur centre situé sur une hélice ayant pour axe l'axe du rouleau et en des positions angulaires espacées de $2\pi/n$, avec n entier, si l'on considère une rotation du rouleau autour de son axe, chacune des cavités renfermant un détecteur de déplacement dont la partie mobile en contact avec la surface interne de l'enveloppe mince est à déplacement radial par rapport au rouleau, l'ensemble des détecteurs étant réunis à des moyens de recueil et de traitement des signaux qu'ils émettent lorsque la partie mobile des capteurs se déplace sous l'effet des efforts exercés par la tôle sur l'enveloppe mince, ce dispositif devant permettre une détection des défauts par mesure précise du niveau des contraintes dans la tôle au moment de son passage sur les capteurs, avec une correction des effets dus aux capteurs eux-mêmes et à la température, ce dispositif devant permettre également une mesure de la valeur instantanée de la traction en divers endroits répartis sur la largeur de la tôle.

Dans ce but, les capteurs sont du type comportant un enroulement primaire et un enroulement secondaire traversés par un noyau magnétique mobile solidaire de la partie mobile du capteur, modifiant par ses déplacements le signal émis par l'enroulement secondaire lorsque l'enroulement primaire est alimenté en courant électrique et le dispositif de détection comporte en outre:

— un système de codage optique pour le repérage très précis de la position angulaire du rouleau,
— et un dispositif programmable utilisant les données fournies par le système de codage optique pour l'émission successive d'une impulsion de courant dans les enroulements primaires de chacun des capteurs, une fois en charge lorsque la tôle est au niveau du capteur et une fois à vide,

les moyens de recueil et de traitement des signaux émis par les capteurs au niveau de leurs enroulements secondaires étant constitués par un moyen de mesure de la valeur du courant secondaire à un moment prédéterminé par rapport au début de l'impulsion, un moyen de transformation de cette valeur en digital un moyen de mise en mémoire de toutes les valeurs digitales, un moyen de calcul des différences des valeurs digitales correspondant à chacun des capteurs en charge et à vide et un moyen d'affichage des résultats relatif à chacun des capteurs.

On va maintenant décrire, à titre d'exemple non limitatif, en se reportant aux figures jointes en annexe, un mode de réalisation du dispositif de détection des défauts de planéité suivant l'invention, dans le cas d'un rouleau de mesure de grande longueur comportant plusieurs séries de cavités comportant des capteurs de mesure.

La figure 1 représente dans une vue en perspective schématique, l'ensemble du dispositif placé à la sortie d'une cage de laminoir.

La figure 2 représente une vue en élévation du rouleau déflecteur faisant partie du dispositif, représenté sans enveloppe cylindrique externe, afin de rendre apparents les logements des capteurs.

La figure 3 est une coupe suivant A—A de la figure 2.

La figure 4 est une coupe suivant B—B de la figure 2.

La figure 5 est une coupe par un plan vertical de symétrie de l'extrémité du rouleau où sont recueillis les signaux en provenance des capteurs.

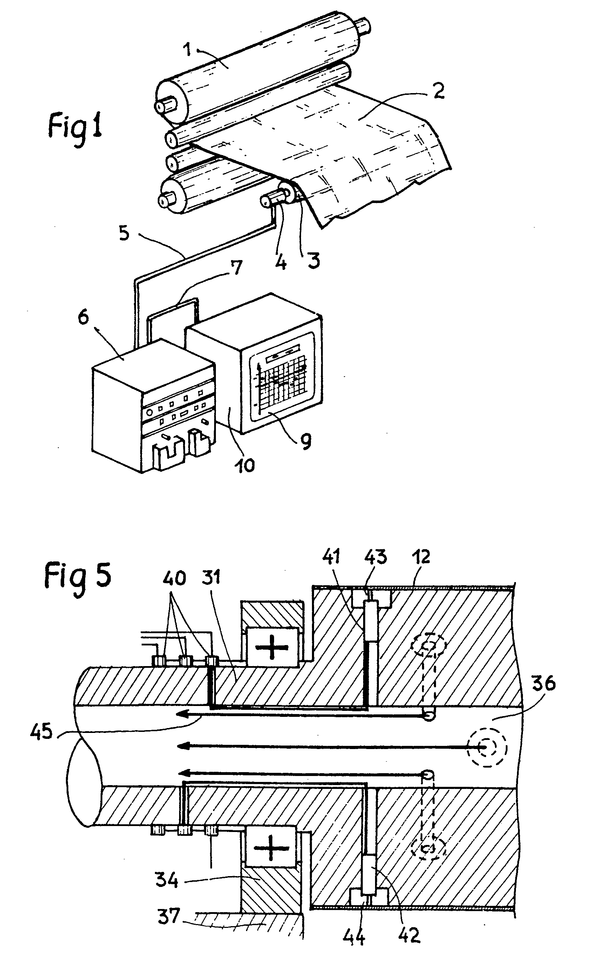

Sur la figure 1 on voit l'ensemble du dispositif placé à la sortie d'une cage 1 d'un laminoir à froid comportant deux rouleaux de travail et deux rouleaux d'appui, de laquelle sort la bande de tôle 2 dont le contrôle de planéité est effectué par passage sur le rouleau déflecteur 3 disposé à la suite de la cage de laminoir 1 parallèlement aux rouleaux de cette cage de laminoir. A l'extrémité du rouleau 3 est disposé un collecteur 4 recueillant les informations venant des capteurs et les transmettant par des lignes de mesure 5 à un ensemble 6 de recueil et de traitement des signaux électroniques incorporant un dispositif programmable l'alimentation des capteurs et relié par des moyens de jonction 7 à un moyen d'affichage 10 comportant un écran cathodique 9 sur lequel on visualise les résultats des mesures permettant la détection des défauts de planéité.

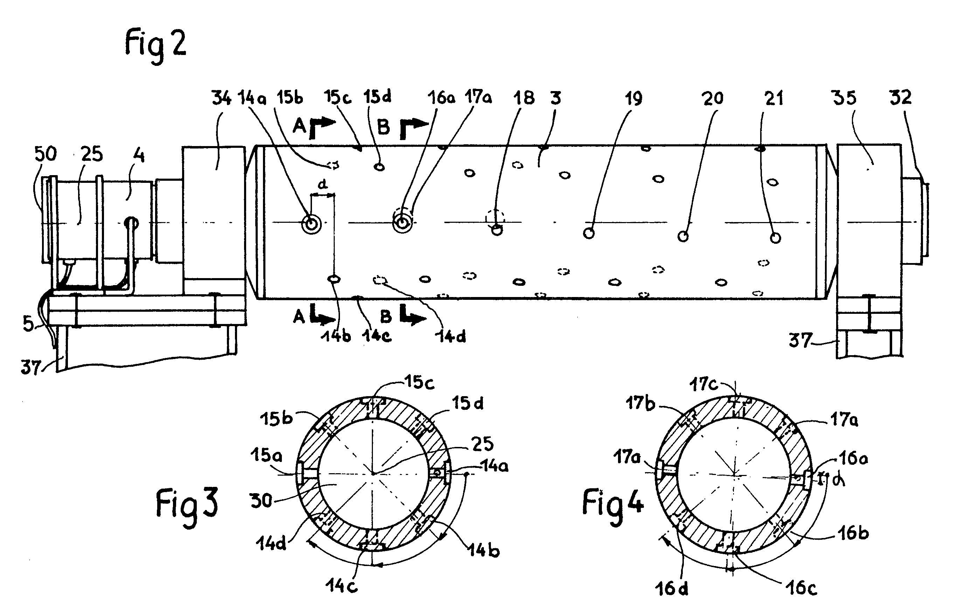

Sur la figure 2 on voit le rouleau déflecteur 3 et son dispositif collecteur 4, le rouleau 3 ne comportant cependant pas l'enveloppe externe mince 12 visible à la figure 5. De cette façon, les cavités 14, 15, 16 et 17 renfermant des capteurs et constituant des ensembles disposés sur des spirales enroulées sur le rouleau sont visibles sur la figure 2.

On n'a représenté sur les figures 3 et 4 que quatre ensembles de quatre cavités disposées angulairement à 45° les unes des autres sur le rouleau et également espacées d'une distance d sur la longueur du rouleau alors que sur toute sa longueur le rouleau comporte douze ensembles de quatre cavités disposées de la manière décrite, c'est-à-dire sur des portions de spirale.

A chacune des cavités de ces ensembles correspond une cavité symétrique par rapport à l'axe du rouleau, chacune de ces cavités symétriques des premières constituant l'ensemble symétrique par rapport à l'axe du rouleau.

Ainsi l'ensemble 15 est symétrique de l'ensemble 14 et l'ensemble 17 est symétrique de l'ensemble 16.

L'ensemble 14 comporte des cavités 14a, 14b, 14c, et 14d. Les cavités correspondantes 15a, 15b, 15c, et 15d de l'ensemble 15 sont respectivement symétriques des cavités 14a, 14b, 14c et 14d par rapport à l'axe 25 du rouleau.

La position angulaire de ces différentes cavités appartenant aux ensembles 14 et 15 est visible à la figure 3 où l'on voit que l'angle formé par les plans de symétrie des diverses cavités est de 45°.

On voit sur la figure 4 que les ensembles 16 et 17 sont constitués par des cavités dont les centres sont alignés sur des hélices comme les centres des cavités des ensembles 14 et 15, avec le même espacement angulaire et le même espacement axial mais avec un petit décalage $\alpha$ visible à la figure 4, ce décalage état de quelques degrés, par exemple 2°.

Ainsi les axes des cavités 14a et 16a sont dans des plans axiaux, c'est à dire passant par l'axe du rouleau faisant entre eux un angle $\alpha$.

Les cavités de l'ensemble 17 sont disposées symétriquement des cavités de l'ensemble 16 par rapport à l'axe du rouleau.

A la suite des ensembles 14 et 15 puis 16 et 17 sont disposés d'autres ensembles tels que 18, 19, 20 et 21 DONT ON N'a représenté qu'une cavité, la cavité 18 étant décalée d'un angle $2\alpha$ par rapport à la cavité 14, la cavité 19 d'un angle $3\alpha$, la cavité 20 d'un angle $4\alpha$ et la cavité 21 d'un angle $5\alpha$.

A chacune des cavités des ensembles 18, 19, 20 et 21 est associée une cavité symétrique par rapport à l'axe du rouleau 25.

Le rouleau comporte donc dans le cas de notre description où il est utilisé pour le contrôle de tôles de grande largeur (1500 mm) douze ensembles de quatre cavités soit quarante huit cavités.

Ainsi qu'il est visible sur les figures 3, 4 et 5, chacune des cavités comporte un ensemble de deux perçages de même axe et de diamètres différents débouchant l'un dans la cavité centrale du rouleau 30 et l'autre à l'extérieur du rouleau sur la surface latérale de celui-ci recouverte par l'enveloppe mince 12.

Le rouleau est en effet un rouleau creux constitué par une enveloppe cylindrique à l'extrémité de laquelle sont rapportés ou usinés des arbres de support 31 et 32 permettant de monter le rouleau tourillonnant dans des paliers 34 et 35 eux-mêmes fixés sur le bâti 37 de l'installation.

A l'une des extrémités du rouleau est également fixé, sur le bâti 37, le collecteur 4 comportant une enveloppe externe fixée sur le bâti 37 et des frotteurs 40 en contact frottant avec le bout d'arbre 31 au niveau des jonctions électriques de chacun des capteurs.

A l'intérieur de chacun des cavités du rouleau est disposé un capteur à courant variable tel que 41 ou 42 comportant une partie mobile 43 (ou 44) dont l'extrémité est en contact avec l'enveloppe mince 12 qui elle-même vient en contact avec la tôle lorsque celle-ci passe sur le rouleau. Les capteurs à courant variable tels que 41 ou 42 comportent également une partie fixe comprenant deux enroulements bobinés l'un au dessus de l'autre et constituant pour l'un l'enroulement primaire et pour l'autre l'enroulement secondaire d'un transformateur de courant, dont le noyau commun aux deux enroulements disposé dans l'axe des deux bobinages constitue avec les tiges 43 et 44 qui sont solidaires · du noyau ferromagnétique correspondant la partie mobile du capteur.

On comprend que dans un tel capteur d'un type connu le courant secondaire varie avec la position du noyau à l'intérieur des enroulements, cette position pouvant être modifiée par déplacement des tiges telles que 43 lorsque celles-ci sont sollicitées à leur extrémité par l'enveloppe mince 12 elle-même déformée par la tôle.

Les circuits primaires de chacun des capteurs sont reliés électriquement à l'une des bagues du collecteur 4 pour son alimentation en courant par l'intermédiaire d'un balai 40 alors que les circuits secondaires de chacun des capteurs sont également reliés électriquement à l'une des bagues du collecteur pour le recueil du signal émis par le circuit secondaire au moyen d'un autre balai 40 du collecteur 4.

Chacun des capteurs tel que 41 est donc relié par un ensemble de fils d'alimentation ou de collecte tel que 45 aux bagues du collecteur disposées à l'extrémité de l'arbre 31.

De cette façon, il est possible d'alimenter les circuits primaires des collecteurs et de recueillir le courant des circuits secondaires grâce à un ensemble de fils passant dans la cavité centrale 30 du cylindre interne du rouleau déflecteur 3.

Les balais du collecteur sont reliés électriquement à l'ensemble 6 représentée sur la figure 1 permettant l'alimentation des circuits primaires grâce au dispositif programmable et le recueil et le traitement des signaux des circuits secondaires de l'ensemble des capteurs, par l'intermédiaire du câble 5 regroupant l'ensemble des fils électriques reliés à chacun des capteurs.

A l'extrémité de l'arbre 31 du rouleau est également disposé à la suite du collecteur un dispositif de codage optique 50 à 1024 positions permettant donc de connaître grâce à un lecteur la position angulaire du rouleau avec une très bonne précision.

Grâce à ce lecteur, la position angulaire du rouleau est déterminée sous forme digitale et transmise à l'unité de traitement 6.

La position des différentes cavités où se trouvent les capteurs étant repéréede façon très précise par rapport au rouleau, il est possible de déterminer de façon exacte le passage d'un capteur donné au niveau de la tôle qui lors de son passage recouvre la partie supérieure du rouleau.

Les différents ensembles de cavités 14, 16, 18, 19, 20 et 21 et les capteurs qu'ils renferment étant décalés les uns par rapport aux autres d'un angle $\alpha$ suivant la longueur du rouleau, le plus grand décalage, c'est-à-dire entre l'ensemble 14 et l'ensemble 21 étant cependant inférieur au décalage angulaire entre deux cavités situées sur une spirale l'une à la suite de l'autre c'est-à-dire 45°, il ne peut y avoir de passage simultané de deux capteurs au niveau le plus haut du rouleau où passe la tôle.

De cette façon il n'y a jamais qu'un capteur en charge à la fois sur la génératrice la plus haute du rouleau. Le dispositif programmable incorporé à l'ensemble 6 de recueil et de traitement est donc programmé de façon à envoyer une impulsion de courant sur chacun des capteurs au moment où ils se trouvent en charge sous la tôle à la partie supérieure du rouleau ou au voisinage de la partie supérieure.

La tôle provoque à ce moment une déformation de l'enveloppe mince du rouleau au niveau de la cavité où se trouve le capteur qui est transmise à la tige du capteur en contact avec la surface interne de l'enveloppe.

Cette déformation et le déplacement du capteur sont proportionnels à la valeur instantanée et locale de la traction dans la bande.

Le courant dans le circuit secondaire du capteur dépend de la position du noyau solidaire de la tige du capteur et constituant avec cette tige la partie mobile de ce capteur. La valeur de ce courant secondaire à un instant prédéterminé après le début de l'impulsion est une fonction simple du déplacement de la partie mobile du capteur c'est-à-dire de la traction.

L'unité de traitement 6 effectue donc l'envoi d'une impulsion de courant sur le circuit primaire d'un capteur déterminé se trouvant à l'aplomb de la tôle pour une position donnée du rouleau, puis la mesure de la valeur du courant secondaire avec un retard égal à une fraction de la durée de l'impulsion par rapport au début de cette impulsion et enfin une conversion en valeur digitale de cette mesure du courant secondaire.

Cette valeur numérique du courant est alors gardée en mémoire dans l'unité de traitement 6.

Lorsque le capteur pour lequel on a réalisé la mesure de courant secondaire en charge est parvenu dans une certaine position où il s'est éloigné de la zone recouverte par la tôle et se trouve à vide, la mesure du courant secondaire est effectuée de la même façon que précédemment, une impulsion étant envoyée dans le circuit primaire pour une certaine valeur de la position du rouleau déterminée par le codeur optique.

On effectue alors la différence entre les valeurs en charge et à vide du courant pour le même capteur, ce qui permet de s'affranchir des facteurs entachant la mesure d'erreurs.

Les mêmes opérations sont réalisées successivement pour tous les capteurs se trouvant dans les cavités des ensembles 14, 16, 18, 19, 20 et 21 et l'ensemble des valeurs des courants secondaires représentatives des valeurs de la traction sur toute la largeur de la tôle recouvrant ledit rouleau au niveau de ces capteurs sont calculées et mises en mémoire puis transmises au dispositif d'affichage 10 qui permet de restituer une image des valeurs de la traction sur la largeur de la bandecomme il est visible à la figure 1.

Les capteurs qui se trouvent dans les cavités des ensembles 15, 17 et des ensembles symétriques des ensembles 18, 19, 20 et 21 sont des capteurs de rechange qui ne sont pas utilisés au cours de la mesure mais qui peuvent être mis en fonctionnement instantanément si l'un ou plusieurs des capteurs des ensembles en service était hors d'usage. De cette façon, le dispositif de mesure peut toujours être utilisé au maximum de sa capacité de détection.

On voit que les principaux avantages du dispositif suivant l'invention est qu'il permet de mesurer une valeur locale et instantanée de la traction dans la bande, cette mesure n'étant pas entachée d'erreurs puisque la même mesure est effectuée sur le capteur en charge et à vide successivement, que la mesure peut être effectuée quelle que soit la vitesse du rouleau et qu'on dispose instantanément de valeurs numériques représentatives des valeurs de la traction sur la largeur de la bande.

D'autre part, les expériences de la demanderesse ont montré que la sensibilité des capteurs et de la chaine de mesure est telle qu'on peut déceler des défaute de planéité se traduisant par des déplacements des tiges des capteurs de l'ordre de quelques microns seulement ou même de quelques dixièmes de microns.

Mais l'invention ne si limite pas au mode de réalisation qui vient d'être décrit; elle en comporte au contraire toutes les variantes.

C'est ainsi qu'on a décrit un rouleau de planéité utilisable pour une bande de grande largeur où les cavités renfermant les capteurs étaient espacées axialement d'une distance d de l'ordre de 60 mm et centrées sur des plans axiaux faisant des angles de 45° les uns par rapport aux autres mais il est possible d'envisager d'autres dispositions de ces capteurs, sur des hélices ayant pour axe l'axe du rouleau, l'angle d'espacement angulaire étant par exemple différent de 45°.

Dans le cas d'un rouleau de moins grande longueur, pour le contrôle de tôles de plus faible largeur, il est possible d'utiliser un nombre de capteurs moins important, ces capteurs étant disposés dans des cavités groupées par ensembles disposés sur des spirales enroulées sur le rouleau avec la même disposition et le même espacement que dans l'exemple qui vient d'être décrit.

Au lieu de douze ensembles de capteurs comme il a été décrit il est possible d'en utiliser un nombre moins important et il est possible également de ne pas recourir à l'utilisation de capteurs de rechange.

Au lieu d'une sortie sur un dispositif de visualisation à écran cathodique comme il a été décrit, on peut utiliser une sortie sur un support quelconque sous forme graphique ou numérique.

On peut imaginer également une utilisation directe des valeurs numériques de la traction comme entrées utilisables par un système de régulation automatique du laminoir ou de l'installation de traitement de la bande à la sortie duquel se trouve le dispositif de détection des défauts de planéité.

Enfin le dispositif suivant l'invention peut être utilisé non seulement en sortie des laminoirs à froid de bande de tôles minces ou d'autres installations de traitement de tôles minces mais également en association avec toute installation de traitement de bandes pour lesquelles il importe d'obtenir une très bonne planéité.

**Revendications**

1. Dispositif de détection des défauts de planéité d'une bande tendue en déplacement comprenant un rouleau déflecteur (3), sur lequel passe la bande, ce rouleau étant constitué par un cylindre interne recouvert par une enveloppe cylindrique mince (12) dans lequel sont usinées des cavités de petite dimension (14, 15, 16, 17) débouchant sur la surface latérale du cylindre pour constituer au moins un ensemble d'ouvertures disposées de façon discontinue sur cette surface, avec leurs centres situés sur une hélice ayant pour axe l'axe du rouleau et en des positions angulaires espacées de $2\pi/n$, avec n entier, si l'on considère une rotation du rouleau autour de son axe, chacune des cavités renfermant un détecteur de déplacement (41, 42) dont la partie mobile (43, 44) en contact avec la surface interne de l'enveloppe mince (12) est à déplacement radial par rapport au rouleau, l'ensemble des détecteurs étant réunis à des moyens (6) de recueil et de traitement des signaux qu'ils émettent lorsque la partie mobile se déplace sous l'effet des efforts exercés par la tôle (2) sur l'enveloppe mince, caractérisé par le fait:

— que les capteurs (41, 42) sont du type comportant un enroulement primaire et un enroulement secondaire traversés par un noyau ferromagnétique mobile solidaire de la partie mobile (43, 44) du capteur modifiant par ses déplacements le signal émis par l'enroulement secondaire lorsque l'enroulement primaire est alimenté en courant électrique, et que le dispositif de détection comporte en outre:

— un système du codage optique (5) pour le repérage très précis de la position angulaire du rouleau (3),

— et un dispositif programmable utilisant les données fournies par le système de codage optique (50), pour l'émission d'une impulsion de courant dans les enroulements primaires de chacun des capteurs une fois en charge lorsque la tôle est au niveau du capteur et une fois à vide,

les moyens (6) de recueil et de traitement des signaux émis par les capteurs (41, 42) au niveau de leurs enroulements secondaires étant constitués par un moyen de mesure de la valeur du courant secondaire à un moment prédéterminé par rapport au début de l'impulsion, un moyen de transformation de cette valeur en numérique, un moyen de mise en mémoire de toutes les valeurs numériques, un moyen de calcul des différences des valeurs numériques correspondant à chacun des capteurs en charge et à vide et un moyen d'affichage (9) des résultats relatifs à chacun des capteurs.

2. Dispositif de détection suivant la revendication 1, caractérisé par le fait que les capteurs (41, 42) sont disposés dans des cavités constituant plusieurs ensembles (14, 15, 16, 17) disposés successivement dans la direction axiale du rouleau, les cavités correspondantes de chacun des ensembles étant décalées l'une par rapport à l'autre dans la direction axiale du rouleau, d'un angle constant inférieur à l'angle d'espacement angulaire des cavités d'un même ensemble.

3. Dispositif de détection suivant l'une quelconque des revendications 1 et 2, caractérisé par le fait qu'on dispose deux ensembles identiques de capteur dans des cavités (14, 15) symétriques deux à deux par rapport à l'axe du rouleau (3), l'un des ensembles étant destiné à être mis en service dans sa totalité pendant que l'autre ensemble n'est pas utilisé.

4. Dispositif de détection suivant l'une quelconque des revendications 1, 2 et 3, caractérisé par le fait que les cavités (14a, 14b) et les capteurs (41) sont disposés dans des positions angulaires espacées de 45° si l'on considère une rotation du rouleau autour de son axe.

## Patentansprüche

1. Vorrichtung zum Feststellen bzw. Abfühlen von Fehlern in der Eben- bzw. Planheit an einem bei der Verschiebung gespannten Band bzw. Streifen, mit einer Ablenkungswalze (3), über welche das Band bzw. der Streifen geführt wird, wobei die Walze von einem inneren Zylinder gebildet ist, der mit einer dünnen zylindrischen Hülle (12) überzogen ist und in welchem Hohlräume (14, 15, 16, 17) kleiner Abmessung ausgespart sind, die in die Seitenoberfläche des Zylinders münden, um wenigstens eine Anordnung von Öffnungen zu bilden, die diskontinuierlich auf dieser Oberfläche angeordnet sind, wobei ihre Mittelpunkte auf einer schraubenförmigen Linie gelegen sind, deren Achse von der Achse der Walze gebildet wird und die im Abstand voneinander in Winkelstellungen von $2\pi/n$ angeordnet sind, worin n eine ganze Zahl bedeutet, wenn eine Drehung der Walze um ihre Achse betrachtet wird, wobei jeder der Hohlräume einen Verschiebungsfühler (41, 42) beherbergt, dessen bewegbarer Abschnitt (43, 44), der in Berührung mit der Innenfläche der dünnen Hülle (12) steht, radial in bezug auf die Walze verschiebbar ist und die Fühleranordnung mit einer Einrichtung (6) für die Aufnahme und Verarbeitung der Signale verbunden ist, die von den Fühlern ausgesendet werden, wenn sich der bewegbare Abschnitt unter der vom Blech (2) auf die dünne Hülle ausgeübten Belastung verschiebt, dadurch gekennzeichnet, daß die Fühler (41, 42) eine primäre und eine sekundäre Wicklung umfassen, die jeweils von einem bewegbaren ferromagnetischen Kern durchsetzt sind, der fest mit dem bewegbaren Teil (43, 44) des Fühlers verbunden ist, der durch seine Verschiebungen das Signal modifiziert, das von der Sekundärwicklung abgegeben wird, wenn die Primärwicklung mit elektrischem Strom versorgt wird, und daß die Abfühlvorrichtung weiters ein optisches Kodierungssystem (50) für eine sehr präzise Bestimmung der Winkelstellung der Walze (3) und eine programmierbare Vorrichtung aufweist, welche die vom optischen Kodierungssystem (50) gelieferten Daten für die Aussendung eines Stromimpulses in die Primärwicklungen jedes der Fühler einmal als Ladestrom, wenn sich das Blech auf der Höhe des Fühlers befindet, und einmal als Leerlaufstrom verwendet, wobei die Einrichtungen (6) zur Aufnahme und Verarbeitung der von den Fühlern (41, 42) an ihren Sekundärwicklungen abgegebenen Signale aus einer Einrichtung zur Messung des Wertes des Sekundärstromes zu einem vorgegebenen Zeitpunkt in bezug auf den Beginn des Stromimpulses, einer Einrichtung zur Umwandlung dieses Wertes in einen Zahlenwert, einer Einrichtung zur Speicherung aller Zahlenwerte, einer Einrichtung zur Berechnung der Unterschiede in den Zahlenwerten, welche jedem der Fühler in geladenem und ungeladenem Zustand entsprechen und aus einer Anzeigeeinrichtung (9) für die jeweiligen Ergebnisse jedes der Fühler bestehen.

2. Abfühlvorrichtung nach Anspruch 1, dadurch gekennzeichnet, daß die Fühler (41, 42) Hohlräumen angeordnet sind, die mehrere nacheinander in axialer Richtung der Walze angeordnete Gruppen (14, 15, 16, 17) bilden, wobei die entsprechenden Hohlräume jeder der Gruppen in bezug aufeinander in axialer Richtung der Walze um einen konstanten Winkel versetzt sind, der geringer ist als der Winkelabstand der Hohlräume einer Gruppe.

3. Abfühlvorrichtung nach Anspruch 1 oder 2, dadurch gekennzeichnet, daß zwei idente Fühleranordnungen in den Hohlräumen (14, 15) jeweils zwei und zwei symmetrisch in bezug auf die Achse der Walze (3) angeordnet werden, wobei eine der Gruppen dazu bestimmt ist, in ihrer Gesamtheit in Betrieb genommen zu werden, während die andere Gruppe nicht verwendet wird.

4. Abfühlvorrichtung nach einem der Ansprüche 1 bis 3, dadurch gekennzeichnet, daß die Hohlräume (14a, 14b) und ihre Fühler (41) in voneinander um 45° im Abstand befindlichen Winkelstellungen angeordnet sind, wenn eine Drehung der Walze um ihre Achse betrachtet wird.

## Claims

1. Device for detecting flatness defects of a taut, moving band, comprising a deflector roller (3) over which the band passes and which is composed of an inner cylinder covered by a thin cylindrical casing (12) and having machined in it cavities (14, 15, 16, 17) of small dimensions leading out onto the side surface of the cylinder so as to form at least one set of openings disposed discontinuously on that surface with their centres situated on a helix whose axis is the axis of the roller and in angular positions spaced apart by $2\pi/n$, in which n is a whole number, with reference to one rotation of the rollers about its axis each of the cavities enclosing a displacement detector (41, 42) of which the movable part (43, 44) in contact with the inner surface of the thin casing (12) is radially displaceable relative to the roller, all of the detectors being connected to means (6) for the collection and processing of the signals which they transmit when the movable part is displaced through the action of the forces exerted by the sheet (2) to the thin casing, characterised by the fact that:

— the pickups (41, 42) are of the type comprising a primary winding and a secondary winding, through which windings passes a movable ferromagnetic core fastened to the movable part (43, 44) of the pickup and modifying through its displacements the signal transmitted by the secondary winding when the primary winding is supplied with electric current, and that the detection device also comprises:
— an optical coding system (50) for very accurate reading of the angular position of the roller (3),
— and a programmable device utilising the data supplied by the optical coding system (50) for the transmission of a current pulse to the primary windings of each of the pickups once under load, when the sheet is level with the pickup, and once without load, the means (6) for the collection and processing of the signals transmitted by the pickups (41, 42) at their secondary windings being constituted by a means of measuring the value of the secondary current at a predetermined moment relative to the commencement of the pulse, a means converting this value into a numerical value, a means of storing all the numerical values, a means of calculating the differences of the numerical values corresponding to each of the pickups under load and without load, and a means (9) for displaying the results relating to each of the pickups.

2. Detection device according to Claim 1, characterised by the fact that the pickups (41, 42) are disposed in cavities constituting a plurality of sets (14, 15, 16, 17) disposed successively in the axial direction of the roller, the corresponding cavities of each of the sets being offset relative to one another in the axial direction of the roller by a constant angle smaller than the angular spacing angle of the cavities of one and the same set.

3. Detection device according to either of Claims 1 and 2, characterised by the fact that two identical sets of pickups are disposed in cavities (14, 15) which are symmetrical two by two relative to the axis of the roller (3), one of the sets being intended to be used in its entirety while the other set is not used.

4. Detection device according to any one of Claims 1, 2 and 3, characterised by the fact that the cavities (14a, 14b) and the pickups (41) are disposed in angular positions spaced 45° apart with reference to a rotation of the roller about its axis.

Fig 1

Fig 5

Fig 2

Fig 3

Fig 4